# EUROPEAN PATENT APPLICATION

(11) **EP 4 815 084 A1**
(43) Date of publication of application: **30.09.2026**
(21) Application number: 26168362.7
(22) Date of filing: 27.03.2026
(51) Int. Cl.: H01M 10/052, H01M 10/04, H01M 50/103, H01M 50/119, H01M 50/15, H01M 50/548, H01M 50/159, H01M 50/166, H01M 50/55, H01M 50/553

(54) **SECONDARY BATTERY AND METHOD OF MANUFACTURING SECONDARY BATTERY**

(30) Priority: 28.03.2025 KR 20250040183
(71) Applicant: SAMSUNG SDI CO., LTD., Yongin-si, Gyeonggi-do 17084 (KR)
(72) Inventor: KIM, Junsik, 17084 Yongin-si (KR)
(74) Representative: Maiwald GmbH

(57) **Abstract**

A secondary battery includes an electrode assembly including a positive electrode, a negative electrode, and a separator disposed between the positive electrode and the negative electrode. The electrode assembly is accommodated in a case body having opening. A cover is coupled to the case body to close the opening. The case body includes an accommodating part in which the electrode assembly is accommodated and a flange part that extending outward from the accommodating part. At least part of the cover is coupled to the flange part. The flange part comprises at least one coupling part arranged along a periphery of the flange and coupled to a coupling member. At least one avoidance part is formed in the cover such that the at least one coupling part is not covered by the cover.

## Description

### BACKGROUND

### Field

The present disclosure relates to a secondary battery and a method of manufacturing the secondary battery.

### Description of Related Art

Unlike primary batteries that are not designed to be recharged, secondary (or rechargeable) batteries can be discharged and recharged. Low-capacity secondary batteries are used in portable, small electronic devices, such as smart phones, feature phones, notebook computers, digital cameras, and camcorders. Large-capacity secondary batteries are widely used as power sources for driving motors in hybrid vehicles and electric vehicles and for storing power (e.g., home and/or utility scale power storage). A secondary battery generally includes an electrode assembly of the includes a positive electrode and a negative electrode, a case accommodating the electrode assembly, and electrode terminals connected to the electrode assembly.

An attachable coupling member may be coupled to a secondary battery for attachment or detachment of the secondary battery in electronic devices, etc. That is, a coupling structure coupled to the coupling member may be added to the secondary battery. However, the addition of the coupling structure increases the volume of the secondary battery, thereby causing a decrease in the energy density of the secondary battery as a whole.

The information disclosed in this section is for the enhancement of understanding of the background of the present disclosure. It may contain information that does not constitute related or prior art.

### SUMMARY

The present disclosure relates to a secondary battery and a method of manufacturing the secondary battery for solving the problems described above. These and other aspects and features of the present disclosure will be described in or will be apparent from the following description of embodiments of the present disclosure.

According to an aspect of the present disclosure, there is provided a secondary battery including a case body having an opening, an electrode assembly accommodated in the case body, with the electrode assembly including a positive electrode, a negative electrode, and a separator disposed between the positive electrode and the negative electrode, and a cover coupled to the case body to close the opening, wherein the case body includes an accommodating part in which the electrode assembly is accommodated, and a flange part that extends outward from the accommodating part, wherein at least part of the cover is coupled to the flange part, wherein the flange part comprises at least one coupling part arranged along a periphery of the flange and coupled to a coupling member, and wherein the at least one avoidance part is formed in the cover such that the at least one coupling part is not covered by the cover.

Each of the case body and the cover may include a metal material.

A thickness of each of the case body and the cover may be 0.2 mm or less.

The at least one coupling part may include at least one of a first hole open to outside of the flange part or a second hole formed inside the flange part.

A shape of the at least one coupling part may correspond to a shape of a coupling structure of the coupling member.

A shape of a cross-section of the accommodating part that is perpendicular to a height direction of the case body may correspond to a shape of the cover.

The at least one coupling part may be arranged at a corner of the flange part.

A radius of curvature of the at least one avoidance part may be greater than a radius of curvature of an edge of the corner of the flange part.

A shape of an edge of the electrode assembly may correspond to a shape of the at least one avoidance part.

The at least one avoidance part may be recessed and spaced apart from the at least one coupling part.

A shape of the at least one avoidance part may correspond to a shape of the at least one coupling part.

The case body may include a first electrode terminal and a second electrode terminal connected to the electrode assembly, wherein the first electrode terminal ad the second electrode terminal are disposed on a same side of the case body, and wherein the flange part includes a first area in which the first electrode terminal extends onto the flange part in a height direction of the case body, and a second area in which the second electrode terminal extends onto the flange part in the height direction of the case body, wherein the at least one coupling part is adjacent to at least one of the first area or the second area.

The at least one coupling part may be disposed between the first area and the second area.

The at least one coupling part may be disposed on at least one of an outer side of the first area and an outer side of the second area.

The case body may include a first electrode terminal and a second electrode terminal connected to the electrode assembly, wherein the first electrode terminal is arranged on a first side of the case body, wherein the second electrode terminal is opposite to the first side of the case body, and wherein the flange part includes a first area in which the first electrode terminal extends onto the flange part in a height direction of the case body, and a second area in which the second electrode terminal extends onto the flange part in a height direction of the case body, wherein the at least one coupling part is be adjacent to at least one of the first area and the second area.

The at least one coupling part may be disposed on at least one of an outer side of the first area and an outer side of the second area.

According to an aspect of the present disclosure, there is provided a method of manufacturing a secondary battery, the method including preparing an electrode assembly including a positive electrode, a negative electrode and a separator disposed between the positive electrode and the negative electrode, and accommodating the electrode assembly in a case body that includes an opening, wherein the case body includes an accommodating part in which the electrode assembly is accommodated, and a flange part that extends outward from the accommodating part, wherein at least part of the cover is coupled to the flange part, wherein the flange part includes at least one coupling part arranged along a periphery of the flange and coupled to a coupling member, and at least one avoidance part is formed in the cover such that the at least one coupling part is not covered by the cover.

The at least one coupling part may be arranged at a corner of the flange part.

A shape of the electrode assembly may correspond to a shape of the at least one avoidance part.

A shape of the at least one avoidance part may correspond to a shape of the at least one coupling part.

According to embodiments of the present disclosure, by providing a coupling part to a flange part engaged with a cover, a space that is otherwise necessary for an additional coupling structure may be omitted, thereby increasing the energy density of the secondary battery.

According to embodiments of the present disclosure, by forming an avoidance part on the cover, the coupling structure may be easily and firmly coupled to the coupling part. Accordingly, the secondary battery may be removably and firmly attached to the electronic device.

However, aspects and features of the present disclosure are not limited to those described above, and other aspects and features not mentioned herein will be clearly understood by a person skilled in the art from the detailed description below.

### BRIEF DESCRIPTION OF DRAWINGS

The drawings illustrate embodiments of the present disclosure, and further describe aspects and features of the present disclosure together with the detailed description of the present disclosure. But the present disclosure is not limited to the embodiments depicted in the drawings.
FIG. 1 is a view of a secondary battery according to embodiments of the present disclosure;
FIG. 2 is a view of a secondary battery according to embodiments of the present disclosure;
FIG. 3 is a view of a case body coupled to a cover according to embodiments of the present disclosure;
FIG. 4 is a view of a case body according to embodiments of the present disclosure;
FIG. 5 is a view of a cover according to embodiments of the present disclosure;
FIG. 6 is a view where a cover is coupled to a flange part of a case body according to embodiments of the present disclosure;
FIG. 7 is a view of the shape of an accommodating part and the shape of an electrode assembly according to embodiments of the present disclosure;
FIG. 8 is a view of a coupling part and an avoidance part according to embodiments of the present disclosure;
FIG. 9 is a view of a coupling part and an avoidance part according to embodiments of the present disclosure;
FIG. 10 is a view illustrating of a coupling part and an avoidance part according to embodiments of the present disclosure;
FIG. 11 is a view illustrating of a coupling part and an avoidance part according to embodiments of the present disclosure; and
FIG. 12 is a flow chart of a method of manufacturing a secondary battery according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to embodiments of the present disclosure, the sizes and the relative sizes of layers and areas illustrated in the drawings may be exaggerated for clarity of explanation. The sizes in the drawings are only for ease of explanation, but the present disclosure is not limited thereto. Like reference numerals in the drawings denote like elements throughout the specification.

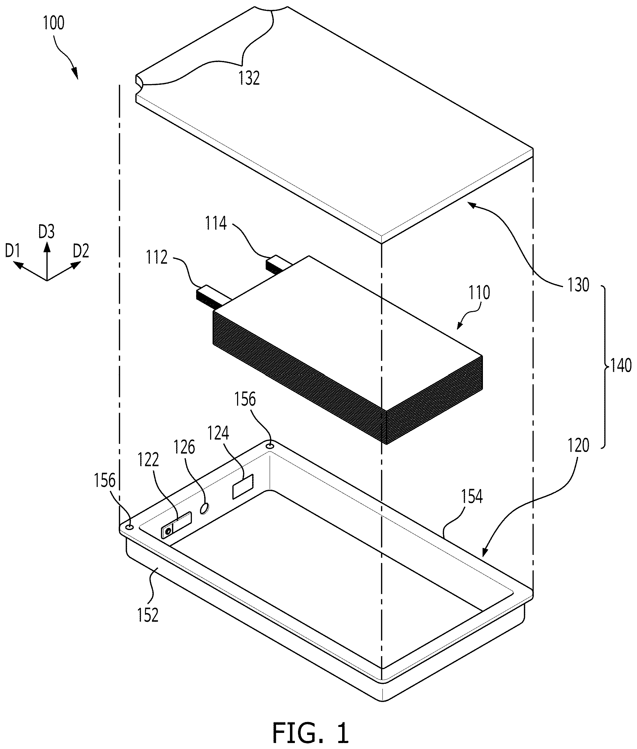

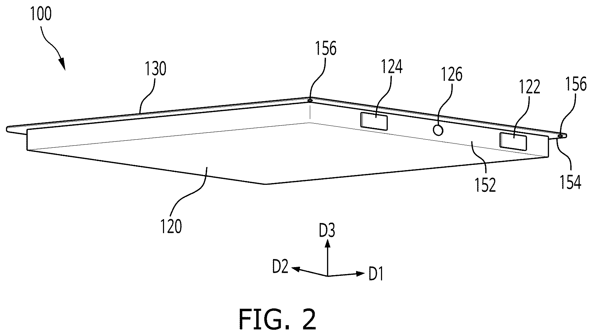

FIG. 1 is an exploded view of a secondary battery 100 according to embodiments of the present disclosure. FIG. 2 is a view of a secondary battery 100 according to embodiments of the present disclosure.

The secondary battery 100 may include an electrode assembly 110 including a positive electrode, a separator, and a negative electrode, and a case 140 in which the electrode assembly 110 is accommodated. The case 140 may include a case body 120 accommodating the electrode assembly 110 and an open side (e.g., one side of the case body 120 in a D3 direction). The case 140 may also include a cover 130 mounted in the opening of the case body 120 and coupled to the case body 120. The electrode assembly 110 may be, for example, wound or stacked with a separator, which is an insulator, interposed between the positive and negative electrodes. The case 140 illustrated in FIG. 1 may be formed from stainless steel (SUS), and the secondary battery 100 may be a SUS can-type secondary battery. But the present disclosure is not limited to such an example. For example, in other embodiments, the case 140 may be formed from a conductive metal such as aluminum, an aluminum alloy, or nickel-plated steel to form the exterior of the secondary battery 100.

A positive electrode for a lithium secondary battery may include a current collector and a positive electrode active material layer formed on the current collector. The positive electrode active material layer may include a positive electrode active material and may further include a binder and/or a conductive material.

The amount of the positive electrode active material may be in a range of about 90 wt% to about 99.5 wt% based on 100 wt% of the positive electrode active material layer. The amount of the binder and the conductive material may be in a range of about 0.5 wt% to about 5 wt%, respectively, based on 100 wt% of the positive electrode active material layer.

The current collector may be formed from aluminum (Al). But the present disclosure is not limited thereto.

As the positive electrode active material, a compound capable of reversibly intercalating/deintercalating lithium (e.g., a lithiated intercalation compound) may be used. For example, at least one of a composite oxide of lithium and a metal such as cobalt, manganese, nickel, and combinations thereof may be used.

The composite oxide may be a lithium transition metal composite oxide, and examples of the composite oxide include a lithium nickel-based oxide, a lithium cobalt-based oxide, a lithium manganese-based oxide, a lithium iron phosphate-based compound, a cobalt-free nickel-manganese-based oxide, or a combination thereof. As more specific examples of the composite oxide, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiaNibCocYdGeO2 (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1- b}G_{b}O₂ (0.90≤a≤1.8, 0.001≤b≤0.1); LiₐMn₂G_{b}O₄ (0.90≤a≤1.8, 0.001≤b≤0.1); LiₐMn_{1- g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In the these formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and Y is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

The negative electrode active material layer may include, for example, about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one of copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon include graphite, such as natural graphite or artificial graphite, and examples of the amorphous carbon include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles.

The silicon-carbon composite may further include crystalline carbon. For example, the silicon-carbon composite may include a core including crystalline carbon and silicon particle and an amorphous carbon coating layer on the surface of the core.

Depending on the type of lithium secondary battery, a separator may be provided between the first electrode plate (e.g., the negative electrode) and the second electrode plate (e.g., the positive electrode). Polyethylene, polypropylene, polyvinylidene fluoride, or a multilayer film of two or more layers thereof may be used as the separator.

The separator may include a porous substrate and a coating layer including an organic material, an inorganic material, or a combination thereof on one or both surfaces of the porous substrate. The organic material may include a polyvinylidene fluoride-based heavy antibody or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. but the present disclosure is not limited to these examples. The organic material and the inorganic material may be mixed in one coating layer. In other embodiments, the organic and inorganic materials may be in the form of a coating layer containing an organic material and a coating layer containing an inorganic material that are laminated on each other.

The electrode assembly 110 may include a positive electrode tab 112 connected to a side of a positive electrode, and a negative electrode tab 114 connected to a side of a negative electrode. The positive electrode tab 112 and the negative electrode tab 114 may be respectively connected to non-coated parts of the positive electrode and the negative electrode by welding a tab or by punching the non-coated parts of the positive electrode and the negative electrode. When stacked, the positive electrode tab 112 and the negative electrode tab 114 may be arranged in parallel by a predetermined distance. However, in other embodiments, the positive electrode tab 112 and the negative electrode tab 114 may be provided on different sides of the secondary battery. The structure of the electrode assembly 110 may vary including with respect to the electrode tabs.

The case body 120 may include a positive electrode terminal 122 and a negative electrode terminal 124. The positive electrode terminal 122 may be electrically connected to the positive electrode tab 112 of the electrode assembly 110, and the negative electrode terminal 124 may be electrically connected to the negative electrode tab 114 of the electrode assembly 110. The positive electrode terminal 122 and the negative electrode terminal 124 may be formed on a surface of the case body 120, e.g., the surface of the case body 120 in a D1 direction as shown in FIG. 1. But the locations of the positive electrode terminal 122 and the negative electrode terminal 124 are not limited to the positions depicted in FIG. 1 and may be different in other examples.

The case body 120 may include an electrolyte injection hole 126. The electrolyte injection hole 126 may be a through hole formed on one surface of the case body 120, e.g., the surface of the case body 120 in the D1 direction. After the case body 120 and the cover 130 are bonded and sealed, the electrolyte injection hole 126 may be formed to inject an electrolyte into the inside of the case of the secondary battery 100. After an electrolyte is injected, a sealing stopper (not shown) may be coupled to the electrolyte injection hole 126. The electrolyte injection hole 126 is illustrated as being disposed between the positive electrode terminal 122 and the negative electrode terminal 124. However, the present disclosure is not limited thereto, but the electrolyte injection hole 126 may be provided at various positions in the case body 120.

The case body 120 may include an accommodating part 152 and a flange part 154. Specifically, the accommodating part 152 configured to accommodate the electrode assembly 110 may be formed around the center area of the case body 120 by a press process. In addition, the flange part 154 that extends outward from the top of the accommodating part 152 may be formed. In particular, the flange part 154 may be formed at the top edges of the accommodating part 152 in four directions.

The case body 120 may be bonded to the cover 130 to form the exterior of the secondary battery 100. For example, the case body 120 and the cover 130 may be bonded by metal bonding (e.g., welding, brazing, soldering, etc.). More specifically, the flange part 154 of the case body 120 may be bonded to the edge of the cover 130. In addition, after the case body 120 is bonded to the cover 130, at least part of the flange part 154 may be cut by using the laser to increase the energy density of the secondary battery.

The flange part 154 may include at least one coupling part 156 arranged along the periphery to be coupled to a coupling member (e.g., pin, bracket, etc.). The shape of the at least one coupling part 156 may be determined based on the coupling structure of the coupling member. For example, when the coupling member is a pin, the shape of the coupling part 156 may have a circular shape to the corresponds to the pin. But the present disclosure is not limited to this shape, but may have various other shapes.

The cover 130 may include at least one avoidance part 132 so that the at least one coupling part 156 is not covered by the cover 130 and is exposed to outside of the second battery. For example, the avoidance part 132 may be recessed and spaced apart from the coupling part 156 so that the coupling part 156 is not covered and is exposed. The shape of the at least one avoidance part 132 may correspond to that of the at least one coupling part 156. For example, when the shape of the coupling part 156 is circular, the shape of the avoidance 132 may also be circular. However, the present disclosure is not limited thereto, but may be various other shapes.

The secondary battery 100 may be a lithium battery cell, a sodium battery cell, etc. However, the scope of the present disclosure is not limited to such examples, and the secondary battery 100 may include all types of batteries that provide electricity by charging and discharging. When the secondary battery 100 is a lithium battery cell, the lithium battery cell may be used in electric vehicles (EV) because of excellent life characteristics and high-rate characteristics. For example, the lithium battery cell may be used in a hybrid vehicle such as a plug-in hybrid electric vehicle (PHEV). In addition, the lithium battery cell may be used in the fields that require a large amount of power storage, such as electric bicycles, electric tools, etc.

By forming the coupling part in the flange part coupled to the cover, the space for an additional coupling structure may be omitted from the second battery, which may thereby increase the energy density of the secondary battery. In addition, the coupling structure may be easily and firmly coupled to the coupling part when the avoidance part is provided on the cover. Accordingly, the secondary battery may be removably and firmly coupled to an electronic device.

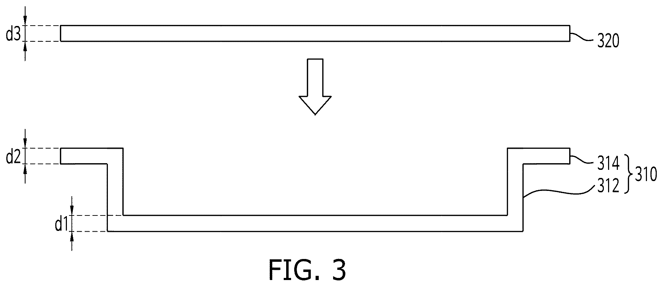

FIG. 3 is a view illustrating a case body 310 coupled to a cover 320 according to embodiments of the present disclosure.

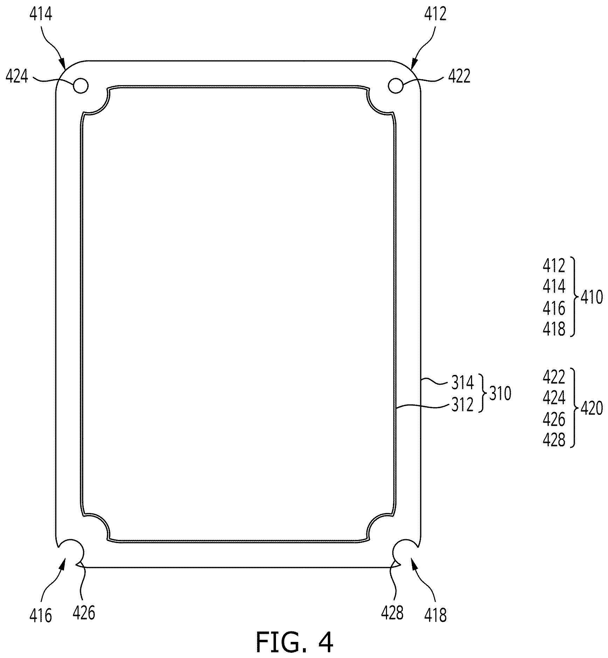

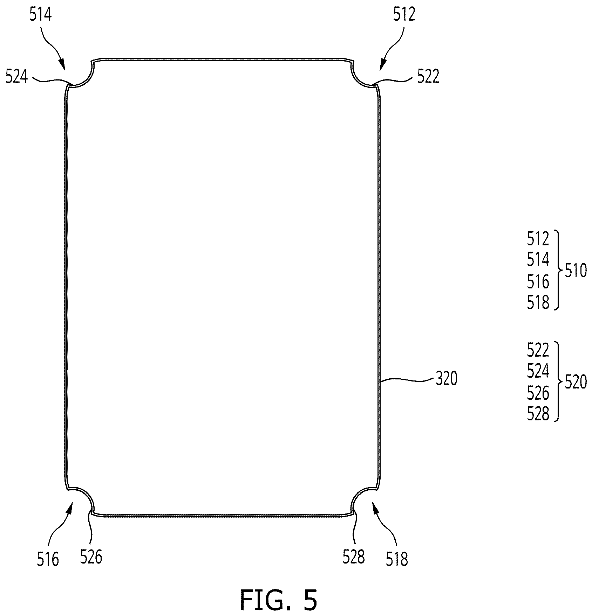

The secondary battery according to embodiments of the present disclosure may include an electrode assembly (e.g., 110 of FIG. 1) and a case (e.g., 140 of FIG. 1) configured to accommodate an electrode assembly. The case may include a case body 310 with an opening to accommodate an electrode assembly, and a cover 320 coupled to the case body 310 to close the opening. Examples of the case body 310 and the cover 320 will be described with reference to FIG. 4 and FIG. 5.

The case body 310 may include an accommodating part 312 that accommodates an electrode assembly and a flange part 314 that extends outward from the top of the accommodating part 312. In this configuration, at least part of the cover 320 may be coupled to the flange part 314. For example, the edge of the cover 320 may be coupled to the flange part 314 by welding bonding, an adhesive, an adhesive tape, etc. But the present disclosure is not limited to such examples of coupling.

Each of the case body 310 and the cover 320 may be formed from a metal material. For example, each of the case body 310 and the cover 320 may be formed from stainless steel, but the present disclosure it is not limited thereto. Each of the case body 310 and the cover 320 may be formed from a thin film shape. Referring to FIG. 3, in a specific example, a thickness d1 of the accommodating part 312, a thickness d2 of the flange part 314, and a thickness d3 of the cover 320 may be 0.2 mm. But the present disclosure is not limited to this specific example.

FIG. 4 is a view of the case body 310 according to embodiments of the present disclosure. FIG. 5 is a view of the cover 320 according to embodiments of the present disclosure.

The case body 310 may include an accommodating part 312 configured to accommodate an electrode assembly (not shown) and a flange part 314 that extends outward from the top of the accommodating part 312. The flange part 314 may include at least one coupling part 420 arranged along the periphery and configured to be coupled to a coupling member. The coupling part 420 may be disposed at a corner 410 of the flange part 314. For example, a first coupling part 422 may be disposed at a first corner 412 of the flange part 314, and a second coupling part 424 may be disposed at a second corner 414 of the flange part 314, and a third coupling part 426 may be disposed at a third corner 416 of the flange part 314. Further, a fourth coupling part 428 may be disposed at a fourth corner 418 of the flange part 314.

The coupling part 420 may include at least one of a first hole that is open to outside of the flange part 314, or a second hole formed inside the flange part 314. For example, referring to FIG. 4, the first coupling part 422 and the second coupling part 424 may be second holes formed inside the flange part 314 in a closed form. The third coupling part 426 and the fourth coupling part 428 may be first holes formed in an open form toward the outside of the flange part 314. The shape of the coupling part 420 may be correspond to the coupling structure of the coupling member.

The cover 320 may include at least one avoidance part 520 formed so that at least one coupling part 420 of the case body 310 is exposed to outside of the secondary battery. The avoidance part 520 may be arranged at a corner 510 of the cover 320. For example, a first avoidance part 522 may be arranged at a first corner 512 of the cover 320, and a second avoidance part 524 may be arranged at a second corner 514 of the cover 320, a third avoidance part 526 may be arranged at a third corner 516 of the cover 320, and a fourth avoidance part 528 may be arranged at a fourth corner 518 of the cover 320.

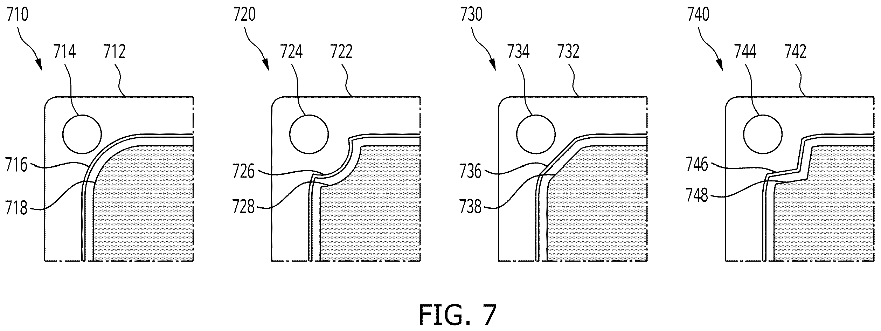

The shape of the avoidance part 520 may correspond to the shape of the coupling part 420. For example, referring to FIG. 4 and FIG. 5, when the shape of the coupling part 420 is circular, the shape of the avoidance part 520 may also be circular. Further, the shape of the cross-section of the accommodating part 312 that is perpendicular to the height direction of the case body 310 may correspond to the shape of the cover 320. An example of the shape of the avoidance part 520 will be described in detail below with reference to FIG. 7.

The avoidance part 520 may be formed so that the coupling part 420 may be uncovered and exposed to outside of the secondary battery. Specifically, the avoidance part 520 may be recessed and spaced apart from the coupling part 420 so that the coupling part 240 is exposed to outside of the secondary battery. Accordingly, when the flange part 314 is coupled to the cover 340, the coupling part 420 is not covered and is exposed by the avoidance part 520.

FIG. 4 illustrates an example where coupling part 420 is arranged at each of the corners 410 of the flange part 314. But the present disclosure is not limited to such an example. In another example, some of the coupling parts 420 may be omitted according to the structure of the electronic device coupled to the secondary battery in the present disclosure. FIG. 4 also illustrates that the shape of the coupling part 420 is circular. But the present is not limited thereto, as the coupling part 420 may be other shapes (e.g., a polygonal shape).

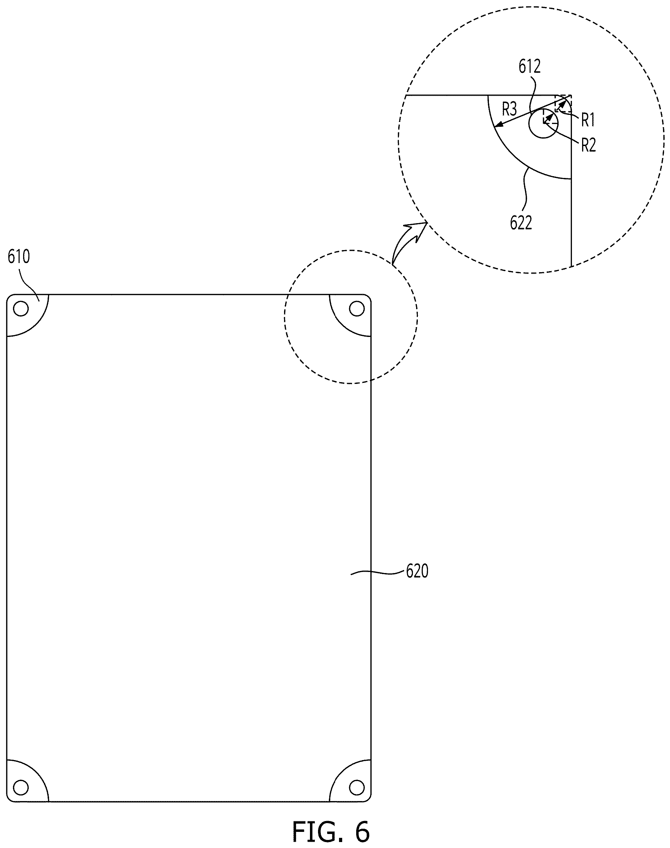

FIG. 6 is a view where a cover 620 is coupled to a flange part 610 of a case body according to embodiments of the present disclosure.

The cover 620 may be coupled to the flange part 610 of the case body. The flange part 610 may include at least one coupling part 612 arranged along the periphery of the flange part 610 and configured to be coupled to a coupling member. In particular, the coupling part 612 may be arranged at the corner of the flange part 610. The cover 620 may also include at least one avoidance part 622 such that the coupling part 612 is not covered and is exposed to outside of the secondary battery.

To facilitate manufacturing of the coupling part 612 at the corner of the flange part 610, a radius of curvature R3 of the avoidance part 622 may be greater than a radius of curvature R1 of the edge of the flange part 610. The radius of curvature R3 of the avoidance part 622 also may be greater than a radius of curvature R2 of the coupling part 612. Further, the radius of curvature R2 of the coupling part 612 may be equal to or greater than the radius of curvature R1 of the edge of the flange part 610.

FIG. 7 is a view of the shape of an accommodating part and the shape of an electrode assembly according to embodiments of the present disclosure.

An electrode assembly may be accommodated in an accommodating part (e.g., 312 of FIG. 4) of a case body. The shape of the edge of the electrode assembly may correspond to the shape of an avoidance part (e.g., 520 of FIG. 5) of a cover. The shape of the cross-section of the accommodating part perpendicular to the height direction of the case body may correspond to the shape of the cover. Accordingly, the shape of the edge of the electrode assembly may correspond to the shape of the edge of the accommodating part.

A first example 710 of the shape of an edge of the corner 716 of the accommodating part of the case body and the shape of an edge of the corner 718 of the electrode assembly accommodated in the accommodating part is shown in FIG. 7. A coupling part 714 coupled to a coupling member may be provided at the corner of a flange part 712. In this case, the edge of the corner 716 of the accommodating part may be spaced part from the coupling part 714, and the edge may be a shape that is convex towards outside. Further, the shape of the edge of the corner 718 of the electrode assembly may correspond to the shape of the edge of the corner 716 of the accommodating part.

A second example 720 of the shape of an edge of the corner 726 of the accommodating part of the case body and the shape of an edge of the corner 728 of the electrode assembly accommodated in the accommodating part is shown in FIG. 7. A coupling part 724 coupled to a coupling member may be provided at the corner of a flange part 722. In this case, the edge of the corner 726 may be spaced apart from the coupling part 724, and the edge may be recessed in an inward convex shape. Further, the shape of the edge of the corner 728 of the electrode assembly may correspond to the shape of the edge of the corner 726 of the accommodating part.

A third example 730 of the shape of an edge of the corner 736 of the accommodating part of the case body and the shape of an edge of the corner 738 of the electrode assembly accommodated in the accommodating part is shown in FIG. 3. A coupling part 734 coupled to a coupling member may be provided at the corner of a flange part 732. The edge of the corner 736 of the accommodating part may be spaced apart from the coupling part 734 and be a diagonal form. The shape of the edge of the corner 738 of the electrode assembly may correspond to the shape of the edge of the corner 736 of the accommodating part.

A fourth example 740 of the shape of an edge of the corner 746 of the accommodating part of the case body and the shape of an edge of the corner 748 of the electrode assembly accommodated in the accommodating part is shown in FIG. 3. A coupling part 744 coupled to a coupling member may be provided at the corner of a flange part 742. The edge of the corner 746 of the accommodating part may be spaced apart from the coupling part 744, and the edge may be recessed to form an inner angle. The shape of the edge of the corner 748 of the electrode assembly may correspond to the shape of the edge of the corner 746 of the accommodating part.

While FIG. 7 illustrates examples of shapes of the edges of the corners of accommodating part, other examples are possible. For example, the shape of the avoidance part of the cover may be similar to the shape of the edge of the accommodating part.

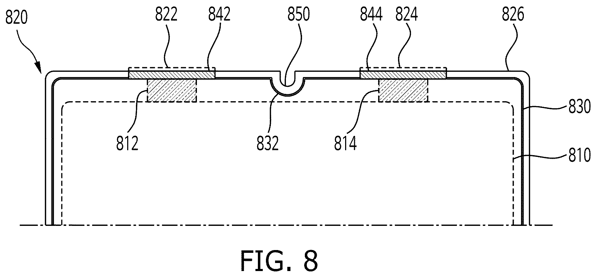

FIG. 8 is a plan view a coupling part 850 and an avoidance part 832 according to further embodiments of the present disclosure.

A case body 820 may accommodate an electrode assembly 810. The case body 820 may include a first electrode terminal 822 and a second electrode terminal 824 electrically connected to the electrode assembly 810. In particular, the first electrode terminal 822 may be connected to a positive electrode or a negative electrode of the electrode assembly 810 through a first electrode tab 812, and the second electrode terminal 824 may be connected to a negative electrode or a positive electrode of the electrode assembly 810 through a second electrode tab 814. The first electrode terminal 822 and the second electrode terminal 824 may be disposed on the same side of the case body 820.

The case body 820 may include an accommodating part in which the electrode assembly 810 is accommodated and from which a flange part 826 extends outward. The flange part 826 may be coupled to at least part of a cover 830 through a coupling part 850 coupled to a coupling member.

The flange part 826 may include a first area 842 where the first electrode terminal 822 extends onto the flange part 826 in the height direction of the case body 820, and a second area 844 where the second electrode terminal 824 extends onto the flange part 826 in the height direction of the case body 820. In this configuration, the coupling part 850 may be adjacent to at least one of the first area 842 or the second area 844. For example, the coupling part 850 may be disposed between the first area 842 and the second area 844. In this arrangement, the space between the electrode terminals is used as a coupling structure.

The cover 830 may include an avoidance part 832 formed to allow the coupling part 850 to be exposed to outside of the secondary battery. The shape of the avoidance part 832 may correspond to the shape of the coupling part 850. The avoidance part 832 may be recessed and spaced apart from the coupling part 850. Accordingly, the avoidance part 832 may be disposed between the first area 842 and the second area 844.

Referring to FIG. 8, the vertical length and horizontal length of the cover 830 are illustrated as being smaller than the vertical length and horizontal length of the flange part 826. But the present disclosure is not limited to such a configuration. As in FIG. 6, the vertical length and horizontal length of the cover 830 may correspond to the vertical length and horizontal length of the flange part 826. In addition, in FIG. 8, the coupling part 850 is illustrated as being in a form that is open to the outside of the flange part 826. But the present disclosure is not limited thereto, and the coupling part 850 may closed inside of the flange part 826.

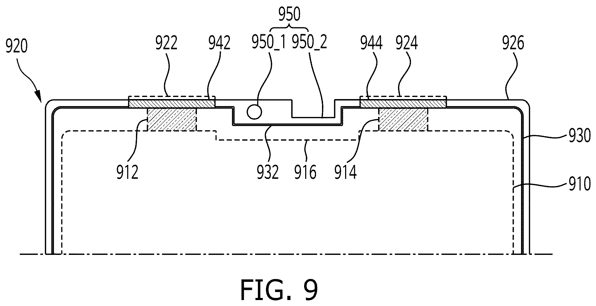

FIG. 9 is a plan view of a coupling part 950 and an avoidance part 932 according to further embodiments of the present disclosure.

A case body 920 may accommodate an electrode assembly 910. The case body 920 may include a first electrode terminal 922 and a second electrode terminal 924 electrically connected to the electrode assembly 910. In particular, the first electrode terminal 922 may be connected to a positive electrode or a negative electrode of the electrode assembly 910 through a first electrode tab 912, and the second electrode terminal 924 may be connected to a negative electrode or a positive electrode of the electrode assembly 910 through a second electrode tab 914. The first electrode terminal 922 and the second electrode terminal 924 may be disposed on the same side of the case body 920.

The case body 920 may include an accommodating part (not shown) in which the electrode assembly 910 is accommodated, and a flange part 926 that extends outward from the top of the accommodating part. The flange part 926 may be coupled to at least part of a cover 930 through a coupling part 950 coupled to a coupling member.

The coupling part 950 may include a first hole 950_1 formed inside the flange part 926 and a second hole 950_2 formed to be open to outside of the flange part 926. The shape of the coupling part 950 may be made to correspond to the coupling structure of the coupling member coupled to the coupling part 950. For example, the shape of the first hole 950_1 may be circular to be coupled to a pin, and the shape of the second hole 950_2 may be square to be coupled to a bracket. But the present disclosure is not limited to such examples.

The flange part 926 may include a first area 942 in which the first electrode terminal 922 extends onto the flange part 926 in the height direction of the case body 920 and a second area 944 in which the second electrode terminal 924 extends onto the flange part 926 in the height direction of the case body 920. In this configuration, the coupling part 950 is adjacent to at least one of the first area 942 or the second area 944, and the coupling part 950 is between the first area 942 and the second area 944. Accordingly, the space between the electrode terminals may be used as the coupling structure.

The cover 930 may include an avoidance part 932 formed to allow the coupling part 950 to be uncovered and exposed to outside of the secondary battery. The shape of the avoidance part 932 may correspond to the shape of the coupling part 950. In addition, the avoidance part 932 may be recessed and spaced apart from the coupling part 950. Accordingly, the avoidance part 932 may be arranged between the first area 942 and the second area 944.

The shape of the electrode assembly 910 may correspond to the shape of the cover 930. Specifically, the shape of the cross-section of the electrode assembly 910 perpendicular to the height direction of the electrode assembly 910 may correspond to the shape of the cover 930. The electrode assembly 910 may include a recessed portion 916 having a similar shape as the avoidance part 932 formed on the cover 930.

Referring to FIG. 9, the vertical length and horizontal length of the cover 930 are illustrated as being smaller than the vertical length and horizontal length of the flange part 926, but the present disclosure is not limited to such a configuration. As in FIG. 6, the vertical length and horizontal length of the cover 930 may correspond to the vertical length and horizontal length of the flange part 926.

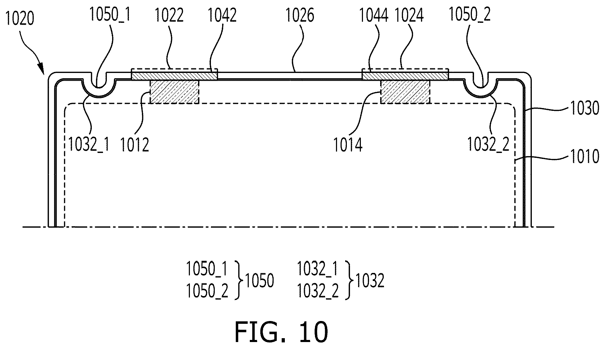

FIG. 10 is a plan view of a coupling part 1050 and an avoidance part 1032 according to still further embodiments of the present disclosure.

A case body 1020 may accommodate an electrode assembly 1010. The case body 1020 may include a first electrode terminal 1022 and a second electrode terminal 1024 electrically connected to the electrode assembly 1010. The first electrode terminal 1022 may be connected to the positive electrode or the negative electrode of the electrode assembly 1010 through a first electrode tab 1012, and the second electrode terminal 1024 may be connected to the negative electrode or the positive electrode of the electrode assembly 1010 through a second electrode tab 1014. The first electrode terminal 1022 and the second electrode terminal 1024 may be arranged on the same side of the case body 1020.

The case body 1020 may include an accommodating part (not shown) for accommodating the electrode assembly 1010 and a flange part 1026 extending outward from the top of the accommodating part. The flange part 1026 may be coupled with at least part of a cover 1030. In addition, the flange part 1026 may include a coupling part 1050 coupled to a coupling member.

The flange part 1026 may include a first area 1042 in which the first electrode terminal 1022 extends onto the flange part 1026 in the height direction of the case body 1020 and a second area 1044 in which the second electrode terminal 1024 extends onto the flange part 1026 in the height direction of the case body 1020. In this arrangement, the coupling part 1050 may be arranged on at least one of the outer side of the first area 1042 and the outer side of the second area 1044. For example, a first coupling part 1050_1 may be disposed on the outside of the first area 1042 (i.e., in a direction facing the second area 1044), and a second coupling part 1050_2 may be disposed on the outside of the second area 1044 (i.e., in a direction facing the first area 1042). With this arrangement, the space outside the electrode terminal is used as the coupling structure.

The cover 1030 may include an avoidance part 1032 formed to allow the coupling part 1050 to be uncovered and exposed to outside of the secondary battery. The shape of the avoidance part 1032 may correspond to the shape of the coupling part 1050. In addition, the avoidance part 1032 may be recessed and spaced apart from the coupling part 1050. Thus, a first avoidance part 1032_1 may be arranged on the outside of the first area 1042, and a second avoidance portion 1032_2 may be arranged on the outside of the second area 1044.

Referring to FIG. 10, the vertical length and horizontal length of the cover 1030 are illustrated as being smaller than the vertical length and horizontal length of the flange part 1026. But the present disclosure is not limited to this example. As in FIG. 6, the vertical length and horizontal length of the cover 1030 may correspond to the vertical length and horizontal length of the flange part 1026. In addition, in FIG. 10 the coupling part 1050 is illustrated as being open to outside of the flange part 1026. But the present disclosure is not limited thereto, and the coupling part 1050 may also be closed to the inside of the flange part 1026.

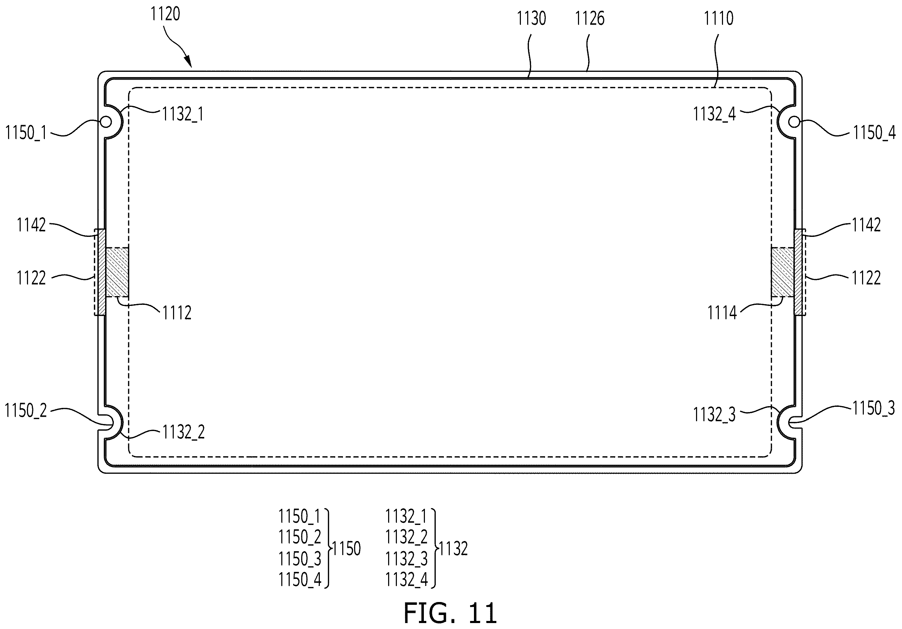

FIG. 11 is a plan view of a coupling part 1150 and an avoidance part 1132 according to embodiments of the present disclosure.

A case body 1120 may accommodate an electrode assembly 1110. The case body 1120 may include a first electrode terminal 1122 and a second electrode terminal 1124 electrically connected to the electrode assembly 1110. The first electrode terminal 1122 may be connected to the positive electrode or the negative electrode of the electrode assembly 1110 through a first electrode tab 1112, and the second electrode terminal 1124 may be connected to the negative electrode or the positive electrode of the electrode assembly 1110 through a second electrode tab 1114. The first electrode terminal 1122 may be arranged on a first side of the case body 1120, and the second electrode terminal 1124 may be arranged on a second side that is opposite to the first side of the case body 1120.

The case body 1120 may include an accommodating part (not shown) for accommodating the electrode assembly 1110 and the flange part 1126 extending outward from the top of the accommodating part. The flange part 1126 may be coupled to at least part of a cover 1130 through a coupling part 1150 that is coupled to a coupling member.

The flange part 1126 may include a first area 1142 in which a first electrode terminal 1122 extends onto the flange part 1126 in the height direction of the case body 1120 and a second area 1144 in which a second electrode terminal 1124 extends onto the flange part 1126 in the height direction of the case body 1120. In this configuration, the coupling part 1150 may be arranged adjacent to at least one of the first area 1142 and the second area 1144. For example, a first coupling part 1150_1 and a second coupling part 1150_2 may be arranged on both sides of the first area 1142, and a third coupling part 1150_3 and a fourth coupling part 1150_4 may be arranged on both sides of the second area 1144. Thus, the space outside the electrode terminal may be used as the coupling structure.

The cover 1130 may include an avoidance part 1132 formed to allow the coupling part 1150 to be uncovered and exposed to outside of the secondary battery. The shape of the avoidance part 1132 may correspond to the shape of the coupling part 1150, and the avoidance part 1132 may be spaced apart from the coupling part 1150. Accordingly, a first avoidance part 1132_1 and a second avoidance part 1132_2 may be arranged on both sides of the first area 1142, and a third avoidance part 1132_3 and a fourth avoidance part 1132_4 may be arranged on both sides of the second area 1144.

Referring to FIG. 11, the vertical length and horizontal length of the cover 1130 are illustrated as being smaller than the vertical length and horizontal length of the flange part 1126. But the present disclosure is not limited thereto. As in FIG. 6, the vertical length and horizontal length of the cover 1130 may correspond to the vertical length and horizontal length of the flange part 1126.

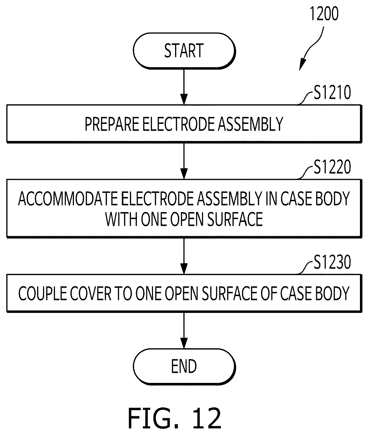

FIG. 12 is a flowchart of a method of manufacturing a secondary battery 1200 according to embodiments of the present disclosure.

A method for manufacturing a secondary battery 1200 may begin with a step S1210 of preparing an electrode assembly including a positive electrode, a negative electrode, and a separator disposed between the positive electrode and the negative electrode. In step S1220, an electrode assembly may be accommodated in a case body with an open surface. The case body may include an accommodating part that accommodates an electrode assembly and a flange part that extends outward from the top of the accommodating part.

A cover may be coupled to one open surface of the case body in step S1230. At least part of the cover may be coupled to the flange part. The flange part may include at least one coupling part arranged along the periphery and coupled to a coupling member. The cover may include at least one avoidance part formed to allow at least one coupling part to be uncovered.

At least one coupling part may be arranged at the edge of the flange part. The shape of corner(s) of the electrode assembly may correspond to the shape of the at least one avoidance part. In addition, the radius of curvature of the edge(s) of the corner(s) the at least one avoidance part may be greater than the radius of curvature of the at least one coupling part.

The shape of the at least one avoidance part may correspond to that of the coupling part(s).

Each of the case body and the cover may include a metal material. The thickness of each of the case body and the cover may be 0.2 mm or less.

The coupling part(s) may include at least one of a first hole that is open to the outside of the flange part and a second hole formed inside the flange part. In addition, the shape of the coupling part(s) may be based on the coupling structure of the coupling member.

The shape of the cross-section that is perpendicular to the height direction of the case body may correspond to the shape of the cover. Also, the shape of the cross-section of the electrode assembly that is perpendicular to the height direction of the electrode assembly may correspond to the shape of the cover. Accordingly, the shape of the avoidance part of the cover may be applied to the shapes of the accommodating part and the electrode assembly.

According to embodiments of the present disclosure, a case body may include a first electrode terminal and a second electrode terminal connected to an electrode assembly. The first electrode terminal and the second terminal electrode may be disposed on the same side of the case body. The flange part may include a first area in which the first electrode terminal extends onto the flange part in the height direction of the case body, and a second area in which the second electrode terminal extends onto the flange part in the height direction of the case body. At least one coupling part may be provided adjacent to at least one of the first and second areas. For example, at least one coupling part may be disposed between the first and second areas. Additionally or alternatively, at least one coupling part may be provided to at least one of the outside of the first area or the outside of the second area.

The first electrode terminal may be disposed on the first side of the case body, and the second electrode terminal may be disposed on the second side of the case body that faces the first side. In this configuration, the coupling part may be disposed to be adjacent to at least one of the first area or the second area. For example, at least one coupling part may be disposed on at least one of the outer side of the first area and the outer side of the second area.

Although the present disclosure has been described above with respect to embodiments thereof, the present disclosure is not limited thereto..

## Claims

1. A secondary battery (100) comprising:
a case body (120) having an opening;
an electrode assembly (110) accommodated in the case body (120), the electrode assembly (110) comprising a positive electrode, a negative electrode, and a separator disposed between the positive electrode and the negative electrode; and
a cover (130) coupled to the case body (120) to close the opening,
wherein the case body (120) comprises:
an accommodating part (152) in which the electrode assembly (110) is accommodated; and
a flange part (154) that extends outward from the accommodating part (152),
wherein at least part of the cover (130) is coupled to the flange part (154),
wherein the flange part (154) comprises at least one coupling part (156) arranged along a periphery of the flange part (154) and coupled to a coupling member, and
wherein at least one avoidance part (132) is formed in the cover (130) such that the at least one coupling part (156) is not covered by the cover (130).

2. The secondary battery (100) as claimed in claim 1,
wherein a thickness of each of the case body (120) and the cover (130) is 0.2 mm or less; wherein preferably each of the case body (120) and the cover (130) includes a metal material.

3. The secondary battery (100) as claimed in claim 1 or 2, wherein the at least one coupling part (156) includes at least one of a first hole open to outside of the flange part (154) or a second hole formed inside the flange part (154).

4. The secondary battery (100) as claimed in any one of the preceding claims, wherein a shape of the at least one coupling part (156) corresponds to a shape of a coupling structure of the coupling member.

5. The secondary battery (100) as claimed in any one of the preceding claims, wherein a shape of a cross-section of the accommodating part (152) that is perpendicular to a height direction of the case body (120) corresponds to a shape of the cover (130).

6. The secondary battery (100) as claimed in any one of the preceding claims, wherein the at least one coupling part (156) is arranged at a corner of the flange part (154).

7. The secondary battery (100) as claimed in claim 6, wherein a radius of curvature of the at least one avoidance part (132) is greater than a radius of curvature of an edge of the corner of the flange part (154).

8. The secondary battery (100) as claimed in claim 6 or 7, wherein a shape of an edge of the electrode assembly (110) corresponds to a shape of the at least one avoidance part (132).

9. The secondary battery (100) as claimed in any one of the preceding claims, wherein the at least one avoidance part (132) is recessed and spaced apart from the at least one coupling part (156).

10. The secondary battery (100) as claimed in any one of the preceding claims, wherein a shape of the at least one avoidance part (132) corresponds to a shape of the at least one coupling part (156).

11. The secondary battery (100) as claimed in any one of the preceding claims, wherein the case body (120) comprises a first electrode terminal (122) and a second electrode terminal (124) connected to the electrode assembly (110),
wherein the first electrode terminal (122) and the second electrode terminal (124) are disposed on a same side of the case body (120), and
wherein the flange part (154) comprises:
a first area (842) in which the first electrode terminal (122) extends onto the flange part (154) in a height direction of the case body (120); and
a second area (844) in which the second electrode terminal (124) extends onto the flange part (154) in the height direction of the case body (120),
wherein the at least one coupling part (156) is adjacent to at least one of the first area (842) and the second area (844).

12. The secondary battery (100) as claimed in claim 11, wherein the at least one coupling part (156) is disposed between the first area (842) and the second area (844); or
wherein the at least one coupling part (156) is disposed on at least one of an outer side of the first area (842) and an outer side of the second area (844).

13. The secondary battery (100) as claimed in any one of the preceding claims, wherein the case body (120) comprises a first electrode terminal (122) and a second electrode terminal (124) connected to the electrode assembly (110),
wherein the first electrode terminal (122) is arranged on a first side of the case body (120),
wherein the second electrode terminal (124) is arranged on a second side that is opposite to the first side of the case body (120), and
wherein the flange part (154) comprises:
a first area (842) in which the first electrode terminal (122) extends onto the flange part (154) in a height direction of the case body (120); and
a second area (844) in which the second electrode terminal (124) extends onto the flange part (154) in the height direction of the case body (120),
wherein the at least one coupling part (156) is adjacent to at least one of the first area (842) and the second area (844).

14. The secondary battery (100) as claimed in claim 13, wherein the at least one coupling part (156) is disposed on at least one of an outer side of the first area (842) and an outer side of the second area (844).

15. A method of manufacturing a secondary battery, the method comprising:
preparing an electrode assembly (110) including a positive electrode, a negative electrode, and a separator disposed between the positive electrode and the negative electrode; and
accommodating the electrode assembly (110) in a case body (120) that includes an opening,
wherein the case body (120) comprises:
an accommodating part (152) in which the electrode assembly (110) is accommodated; and
a flange part (154) that extends outward from the accommodating part (152),
wherein at least part of the cover (130) is coupled to the flange part (154),
wherein the flange part (154) comprises at least one coupling part (156) arranged along a periphery of the flange and coupled to a coupling member, and
wherein at least one avoidance part is formed in the cover (130) such that the at least one coupling part (156) is not covered by the cover (130).
